# EUROPÄISCHE PATENTANMELDUNG

(11) **EP 3 144 344 A1**
(43) Veröffentlichungstag der Anmeldung: **22.03.2017**
(21) Anmeldenummer: 15185179.7
(22) Anmeldetag: 15.09.2015
(51) Int. Cl.: C08J 9/00, C08J 9/04, C08L 33/24, C08F 220/46, C08J 9/16, C08J 9/228

(54) **MEHRFUNKTIONALE ALKOHOLE ALS VERNETZER IN PMI SCHAUMSTOFFEN**

(71) Anmelder: Evonik Röhm GmbH, 64293 Darmstadt (DE)
(72) Erfinder: RICHTER, Thomas, 64293 Darmstadt (DE); BARTHEL, Thomas, 64646 Heppenheim (DE); BORK, Lars, 64331 Weiterstadt (DE); SEIPEL, Christoph, 64832 Babenhausen (DE); BERNHARD, Kay, 64291 Darmstadt (DE)

(57) **Zusammenfassung**

Die Erfindung betrifft die Herstellung von PMI-Schaumstoffen, insbesondere deren Rezepturbestandteile, welche zu einer besonders guten Einstellbarkeit der Dichte bei gegebener Schäumtemperatur führen.

## Beschreibung

### Gebiet der Erfindung

Die Erfindung betrifft die Herstellung von PMI Schaumstoffen, insbesondere deren Rezepturbestandteile, welche zu einer besonders guten Einstellbarkeit der Dichte bei gegebener Schäumtemperatur führen.

### Stand der Technik

Poly(meth)acrylimid (PMI) Schaumstoffe basierend auf (Meth)acrylsäure und (Meth)acrylnitril sind bekannt für ihre hohe Druckfestigkeit und Temperaturbeständigkeit. Hergestellt werden diese Schaumstoffe standardmäßig durch die Polymerisation der entsprechenden Monomere in Anwesenheit von Treibmitteln und weiteren benötigten Additiven in Form von Gussplatten, welche nach erfolgter Polymerisation durch Temperaturbehandlung aufgeschäumt werden.
Die Dichte der so gewonnen und kommerziell vertriebenen Schaumstoffe liegt im Allgemeinen im Bereich von 25 bis 400 kg/m³. Die erhaltene Dichte des Schaumstoffes nach der Schäumung hängt bei gleicher Treibmittelzusammensetzung von der Schäumtemperatur ab. Hierbei sinkt die Dichte bei zunehmender Schäumtemperatur bzw. steigt die Dichte mit abnehmender Schäumtemperatur.

So wird in DE 27 26 260 die Herstellung von Poly(meth)acrylimid-Schäumen (PMI-Schäumen) beschrieben, die ausgezeichnete mechanische Eigenschaften auch bei hohen Temperaturen aufweisen. Die Herstellung der Schäume erfolgt im Gussverfahren, d.h. die Monomere und erforderliche Zusatzstoffe werden gemischt und in einer Kammer polymerisiert. Das Polymerisat wird in einem zweiten Schritt durch Erwärmen geschäumt. Ein Nachteil der in DE 27 26 260 beschriebenen Schäume ist ihre grobe Porenstruktur. Durch Variation der Treibmittel kann die Porengröße bereits erheblich gesenkt werden.

Der Einsatz von Vernetzern in PMI Schäumen zur Realisierung besonders feinporiger Schäume wird u.a. beschrieben in EP 1 678 244. Hierbei wird der Einfluss des Vernetzers auf die thermomechanischen Eigenschaften, wie zum Beispiel die Wärmeformbeständigkeit, sowie die Schaumhomogenität hervorgehoben. Als mögliche Vernetzer werden mehrfach ungesättigte Monomere, wie z.B. Diethylenglykoldiacrylat oder -dimethacrylat oder Allyl(meth)acrylat, oder aber ionische Vernetzer, wie z.B. mehrwertige Metallkationen, die ionische Brücken zwischen den Säuregruppen der Copolymere ausbilden, beschrieben.

DE 197 17 483 beschreibt ein Verfahren zur Herstellung von Polymethacrylimid-Schaumstoffen, die mit 1-5 Gew.-%, bezogen auf die Monomermischung, MgO als ionischem Vernetzer versetzt sind. Man erhält Schäume mit deutlich verbesserten thermomechanischen Eigenschaften. CN 103554354 beschreibt den Einsatz von N,N'-4,4'-diaminodiphenylmethanebismaleimide (BMI) in PMI-Schäumen. Ziel ist hierbei Schäume mit hohen Dichten herzustellen. Als Vernetzer werden hierbei auch mehrfach ungesättigte Monomere und ionische Vernetzer, insbesondere Mg-Ionen, beschrieben.

Mechanisch stabile PMI-Schäume, die mit Allylmethacrylat vernetzt sind, finden sich in EP 356 714. Als Radikalbildner wird beispielsweise Azo-bis-isobutyronitril verwendet, dem zu polymerisierenden Gemisch werden 0,1 Gew% bis 10 Gew% an elektrisch leitfähigen Partikeln zugesetzt Gleiches gilt für die in JP 2006 045532 offenbarten, mit Metallsalzen ionisch vernetzten PMI-Schäume.

Grundsätzlich sind viele der beschriebenen Verfahren für PMI-Schäume auch auf die Herstellung von Polyacrylimid- (PI-)Schäume übertragbar. Solche PI-Schäume auf Basis von Methacrylsäure und Acrylnitril werden beispielsweise in der CN 100420702C beschrieben.

Wie beschrieben ist die Dichte von PMI-Schäumen bei gleicher Zusammensetzung und Menge der Treibmittel von der Schäumtemperatur abhängig. Verschiedene Typen von PMI-Schaumstoffen, wie sie beispielsweise unter dem Produktnamen Rohacell^{®} von der EVONIK Industries AG vertrieben werden, unterscheiden sich jedoch in ihrer Treibmittelzusammensetzung. Daher unterscheiden sie sich auch in ihren Schäumtemperaturen, um die gleiche Dichte zu erreichen.

Für eine effiziente Produktion von PMI-Schaumstoffen wäre es daher wünschenswert, wenn verschiedene Typen von PMI-Schaumstoffen mit zueinander variierenden Zusammensetzungen oder unterschiedlichen Treibmittelzusammensetzungen bei der gleichen Schäumtemperatur unter Erhalt identischer Dichten hergestellt werden könnten. Dies würde die Produktionsprozesse deutlich vereinfachen, da eine Temperaturumstellung des Schäumofens nicht mehr nötig wäre.

### Aufgabe

Aufgabe der vorliegenden Erfindung war es daher, ein Verfahren zu entwickeln, mittels dem die Abhängigkeiten beim Schäumen von P(M)I zwischen Treibmittelzusammensetzung, Schäumtemperatur und erhaltener Dichte voneinander zu entkoppeln.

Insbesondere war es Aufgabe der vorliegenden Erfindung, mittels diesem Verfahren es möglich zu machen, auch bei gleicher Schäumtemperatur und unterschiedlicher Treibmittelzusammensetzung die gleiche Dichte des PMI Schaumstoffes zu erhalten.

Alternativ war es Aufgabe der vorliegenden Erfindung, ein Verfahren zur Verfügung zu stellen, mit dem bei gleicher Schäumtemperatur und gleicher Treibmittelzusammensetzung unterschiedliche Schaumdichten erhalten werden.

### Lösung

Gelöst wurden die Aufgaben durch ein neuartiges Verfahren zur Herstellung eines Schaumstoffen, bzw. Hartschaumstoffen aus Poly(meth)acrylimid, welches dadurch gekennzeichnet ist, dass eine Mischung enthaltend (Meth)acrylnitril, (Meth)acrylsäure, ein Polyol, aufweisend zwischen 2 und 10, bevorzugt zwischen 2 und 4 Hydroxylgruppen, mindestens einen Initiator und mindestens ein Treibmittel zu einer Platte oder einem Pulver polymerisiert, optional getempert, und anschließend bei einer Temperatur zwischen 120 und 300 °C geschäumt wird.

Bevorzugt ist die Menge an Polyol in der Mischung dabei derart gewählt, dass die Hydroxylzahl der Mischung zwischen 0,0008 und 0,2 mol OH-Gruppen / 100 g Polymer, bevorzugt zwischen 0,001 und 0,1 mol OH-Gruppen / 100 g Polymer liegt.

Bevorzugt handelt es sich bei dem Polyol um ein Diol. Besonders bevorzugte Beispiele für ein solches Diol sind Ethylenglycol, 1,10-Decandiol, beta-Hydroxyalkylamide, OH-telecheles Polytetrahydrofuran mit einer mittleren Molmasse zwischen 500 und 8000 g/mol, sowie OH-telechele Polyolefine, Polycarbonate, Polyoxymethylene, Polyethylenglycole, Polypropylenglycole oder Polyester jeweils mit einer Molmasse zwischen 200 und 10 000 g/mol. Einsetzbar sind natürlich auch andere Alkyldiole mit bis zu 20 Kohlenstoffatomen.

Beispiele für gleichsam einsetzbare höhere Polyole sind Glycerin, Pentaerythritol, Xylitol, Alditole oder andere Zuckeralkohole. Einsetzbar sind natürlich beispielsweise auch verzweigte Polyolefine, Polyethylenglycole, Polypropylenglycole, Polyglycerine oder Polyester mit mehr als zwei Hydroxygruppen.

Erfindungsgemäß wirken die Polyole gezielt beim Schäumen als Vernetzer, gehen jedoch vorteilhafterweise bei der vorangehenden Polymerisation oder dem Tempern, entgegen den aus dem Stand der Technik bekannten Vernetzern, keine Vernetzungsreaktion ein. Die Vernetzungsreaktion erfolgt dabei mit an der Polymerkette vorliegenden Säure- oder optional Anhydrid- oder Imidgruppen unter Esterbildung.

Es wurde festgestellt, dass die Vernetzung erst während der Schäumung, d.h. bei Temperaturen oberhalb von 120°C, stattfindet. Eine Vernetzung die vor der Schäumung erfolgt kann zu einem Aufreißen des Schaumes führen, da die Schäumung zu stark behindert wird.

Durch den Einsatz der Polyole konnte überraschenderweise die Dichte der erhaltenen

Schaumstoffe bei gleicher Treibmittelzusammensetzung sehr gut eingestellt werden. Bei gleichem Polyol, gleicher Treibmittelzusammensetzung und gleicher Schäumtemperatur zeigte sich bei einer Erhöhung der Einsatzmenge des Polyols eine Zunahme der Dichte des erhaltenen PMI Schaumstoffes.

Die wesentlichen Vorteile des erfindungsgemäßen Verfahrens sind die folgenden:
- Eine bessere und genauere Einstellbarkeit der Dichte des Schaums
- Keine Nachteile einer Vorvernetzung des Polymers vor dem Schäumen, insbesondere in bezug auf die Homogenität des Schaumstoffs
- Kein aufreißen des Schaums beim Schäumen, insbesondere bei Schäumen mit besonders geringer dichte (hohem Schäumungsgrad)

### Das Polymer

Die Formulierung (Meth)acrylsäure steht für Methacrylsäure, Acrylsäure oder Mischungen aus beiden. Die Formulierung (Meth)acrylnitril steht für Methacrylnitril, Acrylnitril oder Mischungen aus beiden. Entsprechendes gilt für eine Formulierung wie Alkyl(meth)acrylat. Diese steht für die Alkylester der Methacrylsäure, der Acrylsäure oder von Mischungen aus beiden.

Zur Herstellung des Polymers, zum Beispiel in Form eines Gusspolymerisats werden zunächst Monomergemische, welche (Meth)acrylsäure und (Meth)acrylnitril, vorzugsweise in einem Molverhältnis zwischen 2:3 und 3:2 als Hauptbestandteile enthalten, hergestellt. Zusätzlich können weitere Comonomeren verwendet werden, wie z.B. Ester der Acryl- oder Methacrylsäure, Styrol, Maleinsäure oder Itaconsäure bzw. deren Anhydride oder Vinylpyrrolidon. Dabei sollte der Anteil der Comonomeren nicht mehr als 30 Gew%, vorzugsweise nicht mehr als 10 Gew% der beiden Hauptbestandteile betragen. Geringe Mengen von vernetzenden Monomeren, wie z.B. Allylacrylat, können mitverwendet werden. Die Mengen sollten jedoch vorzugsweise höchstens 0,05 Gew% bis 2,0 Gew% betragen.

Das Gemisch für die Copolymerisation enthält ferner Treibmittel, die sich bei Temperaturen von etwa 150 bis 300 °C entweder zersetzen oder verdampfen und dabei eine Gasphase bilden.

Die Polymerisation findet zweckmäßig in Blockform in Gegenwart eines Initiators der radikalischen Polymerisation statt. Bei der Herstellung von flachen Blöcken, z.B. in Schichten mit Dicken bis zu 80 mm, befindet sich das Monomerengemisch zwischen zwei Glasplatten, die am Rand jeweils abgedichtet sind und eine Art Flachkammer bilden. Diese Flachkammer ist von einem Wasserbad umgeben, das auf die gewünschte Polymerisationstemperatur eingestellt wird.

Die Polymerisation kann weitgehend oder über weite Bereiche unter isothermen Bedingungen durchgeführt werden, d.h. bei konstanter Wasserbadtemperatur. In vielen Fällen ist es möglich, von Anfang bis zum Ende der Polymerisation die Wasserbadtemperatur konstant zu halten. Gegebenenfalls kann die Wasserbadtemperatur aber auch zunächst über lange Zeit konstant gehalten werden und nach einer bestimmten Zeit erhöht werden, um einen Teil der Polymerisation bei einer höheren Temperatur durchzuführen.

Auch in dieser nächsten, bei einer höheren Temperatur durchgeführten Polymerisationsphase kann die Wasserbadtemperatur konstant gehalten werden.

Die gewählte Wasserbadtemperatur hängt ab von der Dicke der Polymerisationskammer und der bei der Polymerisation verwendeten Rezeptur, insbesondere den eingesetzten Initiatoren. Dabei ist es im Allgemeinen vorteilhaft, mit steigender Dicke der herzustellenden Platte die Polymerisationstemperatur und damit auch die Temperatur des Wasserbads zu niedrigeren Werten zu verschieben.

Die geeignete Temperatur für Rezeptur und Dicke kann jeweils durch einfache Vorversuche optimiert werden.

Es versteht sich von selbst, dass die Temperatur auf die Dicke der Kammer und der Rezeptur im Rahmen der oben aufgeführten Grenzen so eingestellt wird, dass die bei der Polymerisation frei werdende Wärme in ausreichendem Maße abgeführt werden kann, ohne dass es während der Polymerisation zu unerwünschten Temperaturen im Polymerisationsgemisch kommt. Nach Abschluss des Polymerisationsvorgangs, der vom umgebenden Wasserbad gesteuert wird, wird das Tempern in einem Wärmeschrank durchgeführt. Das Tempern findet im Allgemeinen bei Temperaturen von 80 bis 130 °C statt, wobei, wie bereits ausgeführt, eine gleichmäßig oder in Stufen steigende Temperaturführung, beginnend bei 38 °C, bevorzugt beginnend bei der Polymerisationstemperatur, eingestellt werden kann. Für diese Endpolymerisation im Temperschrank reichen im Allgemeinen 10 bis 1.000 Stunden aus.

### Die Treibmittel

Als Treibmittel (C) können folgende Verbindungen oder Gemische daraus verwendet werden: Formamid, Ameisensäure, Harnstoff, Itakonsäure, Zitronensäure, Dicyandiamid, Wasser, Monoalkylharnstoffe, Dimethylharnstoff, 5,5'-Azo-bis-5-äthyl-1,3-dioxan, 2,2'-Azo-bis-isobuttersäurebutylamid, 2,2'-Azo-bis-isobuttersäure-N-diethylamid, 2,2',4,4,4',4'-Hexamethyl-2,2'-azopentan, 2,2'-Azo-bis-2-methyl-propan, Dimethylcarbonat, Di-tert-butycarbonat, Acetoncyanhydrincarbonat, Oxi-isobuttersäuremethylester-carbonat, N-Methylurethan, N-Ethylurethan, N-tert-butylurethan, Urethan, Oxalsäure, Maleinsäure, Oxi-isobuttersäure, Malonsäure, Cyanformamid, Dimethylmaleinsäure, Methantetracarbonsäuretetraäthylester, Oxamidsäure-n-butylester, Methantricarbonsäuretrimethylester, Methantricarbonsäuretriäthylester, sowie einwertige Alkohole aus 3 bis 8 Kohlenstoffatomen wie z.B. Propanol-1, Propanol-2, Butanol-1, Butanol-2, tert-Butanol und iso-Butanol.

Daneben sind auch copolymerisierbare Treibmittel, die unter den Schäumungsbedingungen eine volatile Verbindung freisetzen und in der Regel danach als (Meth)acrylsäurewiederholungseinheiten im Polymer verbleiben, eingesetzt werden. Beispiele für solche im Allgemeinen bekannten copolymerisierbaren Treibmittel sind iso-Propyl(meth)acrylat und tert-Butyl(meth)acrylat.

### Die Initiatoren

Als Initiatoren werden Verbindungen und Initiatorsysteme verwendet, die radikalische Polymerisationen in Gang setzen können. Bekannte Verbindungsklassen sind Peroxide, Hydroperoxide, Peroxodisulfate, Percarbonate, Perketale, Peroxiester, Wasserstoffperoxid und Azoverbindungen. Beispiele für Initiatoren sind Wasserstoffperoxid, Dibenzoylperoxid, Dicyclohexylperoxodicarbonat, Dilaurylperoxid, Methylethylketonperoxid, Acetylacetonperoxid, Di-tert.-butylperoxid, tert.-Butylhydroperoxid, Cumolhydroperoxid, tert.-Butylperoctanoat, tert.-Butylper-2-ethylhexanoat, tert.-Butylperneodecanoat, tert.-Amylperpivalat, tert.-Butylperpivalat, tert.-Butylperbenzoat, Lithium-, Natrium-, Kalium- und Ammoniumperoxodisulfat, Azoisobutyronitril, 2,2-Azobisiso-2,4-dimethylvaleronitril, 2,2-Azobisisobutyro-nitril, 2,2'-Azo-bis(2-amidinopropan)dihydrochlorid, 2-(Carbamoylazo)isobutyronitril und 4,4'-Azobis(cyanovaleriansäure).

Gleichfalls geeignet sind Redoxinitiatoren (H. Rauch-Puntigam, Th. Völker, Acryl- und Methacrylverbindungen, Springer, Heidelberg, 1967 oder Kirk-Othmer, Encyclopedia of Chemical Technology, Vol. 1, Seiten 286 ff, John Wiley & Sons, New York, 1978). Es kann günstig sein, Initiatoren und Initiatorsysteme mit unterschiedlichen Zerfallseigenschaften bezüglich Zeit und Temperatur zu kombinieren. Bevorzugt werden die Initiatoren in Mengen von 0,01 Gew.-% bis 2 Gew.-%, besonders bevorzugt von 0,15 Gew.-% bis 1,5 Gew.-% bezogen auf das Gesamtgewicht der Monomere eingesetzt.

Die Polymerisation erfolgt vorzugsweise über Varianten der Substanzpolymerisation, wie beispielsweise das so genannte im Stand der Technik beschriebene Kammerverfahren, ohne hierauf beschränkt zu sein.

Ein besonders bevorzugter einsetzbarer Poly(meth)acrylimid-Schaumstoff kann beispielsweise durch folgende Schritte erhalten werden:
1.) Herstellen einer Polymerisatplatte durch radikalische Polymerisation einer Zusammensetzung bestehend aus
   - 20 bis 60 Gew% (Meth)acrylnitril,
   - 40 Gew% bis 78 Gew% (Metha)crylsäure,
   - 0 bis 20 Gew% weiterer monofunktionellen, vinylisch ungesättigten Monomeren
   - ein oder mehreren Polyolen in einer derartigen Menge, dass die Hydrxoylzahl der Mischung zwischen 0,0008 und 0,2 mol OH-Gruppen / 100 g Polymer, bevorzugt zwischen 0,001 und 0,1 mol OH-Gruppen / 100 g Polymer liegt,
   - 1 Gew% bis 15 Gew% eines Treibmittels eines copolymerisierbaren Triebmittels oder eines Treibmittelgemisches,
   - optional 0 bis 5 Gew% weitere Vernetzer,
   - einem Initiatorsystem und
   - üblichen Zusatzstoffen besteht.
   Bei den weiteren Vernetzern kann es sich um radikalisch polymerisierbare, vinylisch ungesättigte Verbindungen mit mindestens 2 Doppelbindungen im Molekül oder um metallionische Verbindungen, insbesondere um Magnesiumoxid, gelöst in der Monomermischung, handeln. Besonders bevorzugt werden neben den Polyolen keine oder in Summe maximal 1 Gew% zusätzliche Vernetzer eingesetzt.
2.) Diese Mischung wird zwischen 10 Stunden und mehreren Tage bei einer Temperatur - in Abhängigkeit der verwendeten Initiatoren und der eingestellten Materialdicke - zwischen 28 °C und 110 °C in einer aus zwei Glasplatten, beispielsweise der Größe 50 cm * 50 cm und einer 2,2 cm dicken Randabdichtung gebildeten Kammer polymerisiert. Anschließend wird das Polymerisat zur Poly(meth)acrylimid Endpolymerisation etwa 20 h einem von 40°C bis 130°C reichenden Temperprogramm unterworfen, wobei die Tempertemperatur unterhalb der durch die eingesetzten Treibmittel eingestellten Schäuumungstemperatur liegt. Die darauffolgende Schäumung erfolgt während einiger Stunden bei zum Beispiel 190 bis 250 °C.

### Optionale Zusatzstoffe für Poly(meth)acrylimide

Des Weiteren können den Gemischen übliche Zusatzstoffe zugesetzt werden. Geeignete Gesamtmengenengen an Zuschlagsstoffen sind z. B. 0 Gew% bis 20 Gew%, 0 Gew% bis 10 Gew% oder 0 Gew% bis 5 Gew%, bezogen auf die Monomermischung. Die üblichen Zusatzstoffe sind dabei verschieden von den genannten Monomeren, Vernetzer, Treibmittelmitteln oder Initiatoren.

Hierzu gehören unter anderem Antistatika, Antioxidantien, Entformungsmittel, Schmiermittel, Farbstoffe, Fließverbesserungsmittel, Füllstoffe, Lichtstabilisatoren und organische Phosphorverbindungen, wie Phosphite oder Phosphonate, Pigmente, Trennmittel, Verwitterungsschutzmittel und Weichmacher. Weitere mögliche Zusätze sind Flammschutzmittel. Neben halogenhaltigen Flammschutzmitteln, die teilweise Antimonoxide enthalten, können auch phosphorhaltige Verbindungen eingesetzt werden. Phosphorhaltige Verbindungen sind wegen der geringeren Rauchgastoxizität im Brandfall bevorzugt. Zu den Phosphorverbindungen gehören unter anderem Phosphane, Phosphanoxide, Phosphoniumverbindungen, Phosphonate, Phosphite und/oder Phosphate. Diese Verbindungen können organischer und/oder anorganischer Natur sein, wie beispielsweise Phosphorsäuremonoester, Phosphonsäuremonoester, Phosphorsäurediester, Phosphonsäurediester und Phosphorsäuretriester sowie Polyphosphate.
Leitfähige Partikel, die eine elektrostatische Aufladung der Schaumstoffe verhindern, sind eine weitere Klasse von bevorzugten Zusatzstoffen. Hierzu gehören unter anderem Metall- und Rußpartikel, die auch als Fasern vorliegen können, mit einer Größe im Bereich von 10 nm bis 10 mm, wie dies in EP 0 356 714 A1 beschrieben ist.

Die erfindungsgemäßen Hartschaumstoffe lassen sich breit einsetzen. So können diese beispielsweise mit Deckschichten, z.B. in Form einer Sandwichstruktur oder eines mit dem Hartschaum gefüllten Pultrodats als Compositematerial verarbeiten. Aus dem Hartschaum können jedoch auch Formteile ohne Deckschichten geschnitten werden. Auch ist es möglich den Schaumstoff nur teilzuschäumen und unter Formgebung endzuschäumen. Weiterhin kann der Schaumstoff vor dem Schäumen granuliert oder direkt, beispielsweise mittels Polymerisation in Form einer Suspensionspolymerisation als Partikel hergestellt werden. Aus solche Mahlguten bzw. Suspensionspolymerisaten lassen sich Partikelschäume bzw. Formkörper aus Partikelschaumstoffen herstellen. Durch Schneiden oder Sägen sind darüber hinaus dünne Schaumplatten oder -folien darstellbar.

Der erfindungsgemäß erhältlichen Schaumstoffe eignen sich insbesondere als Werkstoffkomponente bei der Herstellung von Raum-, Luft-, Wasser-, Schienen- und Landfahrzeugen, wie Automobilen, Fahrrädern oder Motorrädern. Weitere Anwendungsgebiete sind der Bau von Windkraftanlagen oder Sportgeräten, wie zum Beispiel Skier.

### Beispiele

49 gewTeile Methacrylsäure, 50 gewTeile Methacrylnitril, 7 gewTeile tert-Butanol, 2 gewTeile tert-Butylmethacrylat, 0,22 gewTeile MgO, 0,04 gewTeile tert-Butylperpivalat, 0,036 gewTeile tert-Butylper-2-ethylhexanoat, 0,1 gewTeile tert-Butylperbenzoat, 0,103 gewTeile Cumylperneodecanoat, 50 ppm 1,4-Benzochinon und 0,3 gewTeile Moldwiz INT20E (Trennmittel; Hersteller Axel Plastics) sowie die in Tabelle 1 angegebenen Mengen an Polyolen wurden gemischt und so lange gerührt, bis eine homogene Lösung erhalten wurde. Die Lösung wurde zwischen zwei Glasplatten, die durch eine umlaufende Dichtschnur abgedichtet waren, 140 h bei 41 °C zu 2 3mm dicken Polymerplatten polymerisiert. Die Polymerplatten wurden nach dem Abkühlen und der Entnahme aus den Glasplatten bei 115 °C 3 h getempert und dann bei 215 °C für 2 h in einem Umluftofen geschäumt. Die erhaltenen Dichten sind in Tabelle 1 wiedergegeben.

**Tabelle 1**

| **Beispiel** | **Polyol** | **Eingesetzte Menge Polyol (gewTeile)** | **Dichte (kg/m³)** |
|---|---|---|---|
| Vergleichsbeispiel 1 | -- | 0 | 61 |
| Beispiel 1 | Ethylenglycol | 0,2 | 70 |
| Beispiel 2 | Ethylenglycol | 0,8 | 97 |
| Beispiel 3 | Ethylenglycol | 1,5 | 109 |
| Beispiel 4 | 1,10-Decandiol | 0,8 | 80 |
| Beispiel 5 | 1,10-Decandiol | 1,5 | 91 |
| Beispiel 6 | Glycerin | 0,8 | 97 |
| Beispiel 7 | PolyTHF2000 | 2 | 63 |
| Beispiel 8 | PolyTHF2000 | 5 | 71 |

Die Formulierungen der Beispiele unterscheiden sich lediglich in der Art und Menge des eingesetzten Polyole. Man erkennt, dass die Art und Menge des eingesetzten Polyols einen deutlichen Einfluss auf die Dichte des PMI Schaumes (bei gleicher Schäumtemperatur und Schäumzeit [2h]) hat. Somit kann die Dichte des erhaltenen Schaumstoffes lediglich über eine Variation der Menge bzw. Art des Vernetzers eingestellt werden.

## Patentansprüche

1. Verfahren zur Herstellung eines Schaumstoffs aus Poly(meth)acrylimid, **dadurch gekennzeichnet, dass** eine Mischung enthaltend (Meth)acrylnitril, (Meth)acrylsäure, ein Polyol, aufweisend zwischen 2 und 10 Hydroxylgruppen, mindestens einen Initiator und mindestens ein Treibmittel zu einer Platte oder einem Pulver polymerisiert, optional getempert, und anschließend bei einer Temperatur zwischen 120 und 300 °C geschäumt wird.

2. Verfahren gemäß Anspruch 1, **dadurch gekennzeichnet, dass** die Menge an Polyol in der Mischung derart gewählt ist, dass die Hydroxylzahl zwischen 0,0008 und 0,2 mol OH-Gruppen / 100 g Polymer liegt.

3. Verfahren nach Anspruch 1 oder Anspruch 2, **dadurch gekennzeichnet, dass** es sich bei dem Polyol um ein Diol handelt.

4. Verfahren nach Anspruch 3, **dadurch gekennzeichnet, dass** es sich bei dem Diol um Ethylenglycol, 1,10-Decandiol, beta-Hydroxyalkylamide, OH-telecheles Polytetrahydrofuran mit einer mittleren Molmasse zwischen 500 und 8000 g/mol oder um OH-telechele Polyolefine, Polycarbonate, Polyoxymethylene, Polyethylenglycole, Polypropylenglycole, Polyglycerine oder Polyester jeweils mit einer Molmasse zwischen 200 und 10 000 g/mol handelt.

5. Verfahren nach Anspruch 1 oder Anspruch 2, **dadurch gekennzeichnet, dass** es sich bei dem Polyol um Glycerin, Pentaerythritol, Xylitol, Alditole oder ein anderer Zuckeralkohol handelt.

6. Verfahren gemäß mindestens einem der Ansprüche 1 bis 5, **dadurch gekennzeichnet, dass** die Menge an Polyol in der Mischung derart gewählt ist, dass die Hydroxylzahl zwischen 0,001 und 0,1 mol OH-Gruppen / 100 g Polymer liegt.

7. Verfahren gemäß mindestens einem der Ansprüche 1 bis 6, **dadurch gekennzeichnet, dass** die Mischung aus
- 20 bis 60 Gew% (Meth)acrylnitril,
- 40 Gew% bis 78 Gew% (Metha)crylsäure,
- 0 bis 20 Gew% weiterer monofunktionellen, vinylisch ungesättigten Monomeren
- ein oder mehreren Polyolen in einer derartigen Menge, dass die Hydrxoylzahl der Mischung zwischen 0,0008 und 0,2 mol OH-Gruppen / 100 g Polymer, bevorzugt zwischen 0,001 und 0,1 mol OH-Gruppen / 100 g Polymer liegt,
- 1 Gew% bis 15 Gew% eines Treibmittels eines copolymerisierbaren Triebmittels oder eines Treibmittelgemisches,
- optional 0 bis 5 Gew% weitere Vernetzer,
- einem Initiatorsystem und
- üblichen Zusatzstoffen besteht.

8. Verwendung eines Schaumstoffs aus Poly(meth)acrylimid, welcher mittels eine Verfahrens gemäß mindestens einem der Patentansprüche 1 bis 7 hergestellt wurde, zur Herstellung von Raum- , Luft- , Wasser-, Schienen-, Landfahrzeugen, Windrädern oder Sportgeräten.

9. Verwendung eines Schaumstoffs aus Poly(meth)acrylimid, welcher mittels eine Verfahrens gemäß mindestens einem der Patentansprüche 1 bis 7 hergestellt wurde, zur Herstellung von Partikelschäumen, Sandwichmaterialien oder mit dem Schaumstoff gefüllten Pultrosaten.

10. Verwendung eines Partikelschaums, Sandwichmaterials oder mit dem Schaumstoff gefüllten Pultrodats welche gemäß Anspruch 9 hergestellt wurden zur Herstellung von Raum- , Luft- , Wasser-, Schienen-, Landfahrzeugen, Windrädern oder Sportgeräten.
